# EUROPEAN PATENT APPLICATION

(11) **EP 4 804 028 A1**
(43) Date of publication of application: **09.09.2026**
(21) Application number: 25305289.8
(22) Date of filing: 04.03.2025
(51) Int. Cl.: G06F 9/50, G06F 9/455

(54) **METHOD FOR SHARING NETWORK INTERFACE, APPARATUS AND CORRESPONDING COMPUTER PROGRAM**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: ROLLET, Romain, 35708 RENNES CÉDEX 7 (FR)
(74) Representative: Plasseraud IP

(57) **Abstract**

The invention relates to a network interface controller (NIC) sharing method, the method being implemented by a virtual machine (RTOS VM) running Real-Time Operating Systems (RTOS) in charge of executing time critical tasks, the method comprising:
- implementing (S01), by the RTOS, a hardware driver (NICd) for exclusively driving the NIC from the RTOS,
- implementing (S02), by the RTOS, a backend driver (BE-vNIC) for driving a virtual NIC (vNIC) from said RTOS, the backend driver (BE-vNIC) enabling receiving and transmitting network frames to at least one user virtual machine, each of the at least one user virtual machine using an at least one corresponding frontend driver,
- the RTOS setting (S03) at least one shared memory region (SMR) of a memory space dedicated to the RTOS VM, to store and exchange the network frames of the at least one user virtual machine for enabling the backend driver (BE-vNIC) to exchange the network frames with the at least one frontend driver.

## Description

### Domain of the invention

The disclosure relates to physical resource sharing in virtual computing. More specifically, the disclosure relates to the efficient sharing of a physical network interface in a context of mixed criticality computing environment. More Specifically, the disclosure relates to a method for efficiently sharing a physical network interface use with several virtual machines having different levels of criticalness.

### Prior Art

Mixed criticality systems involve running applications with varying levels of importance (criticality) on a single computing platform. These applications have different requirements for real-time performance, safety, reliability, and security. Industries like aerospace, defence, automotive, and medical often utilize mixed criticality systems due to their complex architectures. An advantage of mixed criticality is cost reduction. By consolidating multiple applications onto a single platform, the need for separate hardware, software, and maintenance is reduced.

Virtualization technologies offer solutions for implementing mixed criticality systems, providing a way to integrate, manage, and reuse heterogeneous software components while maintaining space and temporal isolation between them. Virtualization allows the simultaneous running of Real-Time Operating Systems (RTOS) and General Purpose Operating Systems (GPOS) on the same hardware, with dedicated resource allocation. Virtualization relies on a hypervisor, also known as a virtual machine monitor (VMM), to create and manage virtual machines. The hypervisor takes advantage of hardware features to run emulated software at near-native speeds. This is achieved by allowing less-privileged software to run almost unmodified, with the hypervisor emulating hardware responses for instructions requiring higher privileges.

Several device virtualization techniques exist, including device emulation, paravirtualization, and device passthrough. Device emulation emulates existing hardware devices by the hypervisor, offering compatibility with existing in-box drivers but potentially suffering from performance issues. Paravirtualization uses a specific device virtualization framework (like virtio) to implement a communication interface between the hypervisor and the guest OS, improving performance compared to emulation but requiring a modified guest OS with specialized drivers and still requiring hypervisor device emulation. Device passthrough, or device assignment, allows the guest OS to directly use a physical device, that can result in performance improvements by eliminating the overhead of emulation in the hypervisor.

SR-IOV (Single Root I/O Virtualization and Sharing Specification) extends the PCI Express (PCle) specification to enable multiple virtual machines to directly access portions of physical I/O resources. SR-IOV devices present Physical Functions (PFs) and Virtual Functions (VFs). Each VF, managed by a PF, owns dedicated resources for performance-critical data movement. A VF can be considered a lightweight PCle I/O device, capable of sending and receiving packets independently, allowing a single Ethernet port to map to multiple VFs, each used in passthrough mode by a dedicated guest OS.

The main problem on these architectures is the efficient sharing of a single network interface controller (NIC) in a virtualized architecture used to run a mixed criticality system. In such a configuration, several Virtual Machines (VM) may run over the hypervisor with different Operating Systems, including RTOS, and run some applications with different criticality to access the network.

Indeed, in existing solutions, the hypervisor provides to the VMs an emulation of a network device, introducing latency for network operations because the device emulation is SW-based, and network frames must be routed to/from the physical network interface. Such a solution is not adapted to critical applications with stringent real-time requirements (i.e. low latency) that may run in some optimized VM. Furthermore, it consumes a lot of CPU resources in the hypervisor to run device emulator.

As exposed, another existing solution is HW based SR-IOV, allowing a very efficient sharing of a single network interface among different VMs by providing PCle Virtual Functions. However, they are rather limited in term of routing functionalities. Few products are available on the market and this solution targets high end machines (data center server) and are expensive and not adapted to low end or middle market systems.

In consequence, there is a need for a SW solution that can rely on a consumer NIC supporting multiple HW reception and transmission queues and uses some SW mechanisms to share the NIC among different VMs in an efficient and cost-effective manner.

### Summary of the disclosure

The disclosure allows solving at least part of the above problem. The disclosure more specifically proposes a network interface controller sharing method, the method being implemented by a virtual machine running a Real-Time Operating Systems in charge of executing time critical tasks, the network interface controller NIC being attached to a processing device comprising at least one physical computing unit and at least one physical memory unit, the method comprising:
- implementing, by the RTOS, a hardware driver for exclusively driving the NIC from the RTOS,
- implementing, by the RTOS, a backend driver for driving a virtual NIC from said RTOS, the backend driver enabling receiving and transmitting network frames to at least one user virtual machine, each of the at least one user virtual machine using an at least one corresponding frontend driver,
- the RTOS setting at least one shared memory region of a memory space dedicated to the RTOS VM, to store and exchange the network frames of the at least one user virtual machine for enabling the backend driver to exchange the network frames with the at least one frontend driver.

Hence, by implementing a hardware driver and a backend driver within a Real-Time Operating System virtual machine, the method ensures that time-critical tasks have direct and exclusive access to the network interface controller. This setup minimizes latency and maximizes performance for critical applications by bypassing the hypervisor for NIC management, thus reducing overhead and potential bottlenecks. Additionally, the use of shared memory regions facilitates fast and secure data exchange between the RTOS VM and user VMs, ensuring data isolation and integrity while supporting multiple virtual machines. This architecture and method thus enhance real-time performance and provide a scalable solution for efficiently sharing network resources across various virtual machines with differing levels of criticality.

According to a specific feature, the at least one subspace of the memory space comprises: the backend driver registering the at least one user virtual machine through the at least one frontend driver of the at least one user virtual machine and comprises:
- the backend driver allocating and initializing one first shared memory region for each of the frontend driver, each first shared memory region comprising network frame exchanges data structures,
- the backend driver allocating and initializing at least one second shared memory region to store network frames data buffers used for transmission and reception.

Hence, having the backend driver allocate and initialize distinct shared memory regions for each frontend driver, ensures that network frame exchanges and data buffers are organized and isolated, thus allowing streamlined data processing, as each user virtual machine has dedicated memory resources for its network operations, reducing contention and potential data bottlenecks, notably in some execution modes.

According to a specific feature, each first shared memory region is exclusively accessible by the backend driver and the at least one frontend driver each belonging to a sole user virtual machine.

In consequence, this prevents data leakage and unauthorized access between VMs. This exclusive access model enhances the integrity and confidentiality of network data, as each VM operates within its own isolated memory space. In addition, this approach minimizes the risk of data corruption and interference, thereby improving the reliability and stability of network operations across multiple VMs.

According to a specific feature, wherein network frame exchange data structures initialized in the first shared memory region comprise, for each frontend driver, at least a couple of vrings data structure, comprising a transmission vring data structure and a reception vring data structure.

In consequence, the method facilitates seamless and bi-directional communication between the backend and frontend drivers. This setup allows for rapid and reliable transfer of network frames, minimizing latency and ensuring timely data delivery, which is interesting in real-time and mixed criticality systems. The use of vrings also simplifies queue management, as they provide a structured approach to handling data flow, reducing the complexity of data processing.

According to a specific feature:
- the reception vring data structure is used to convey messages from the backend driver to the corresponding frontend driver,
- the transmission vring data structure is used to convey messages from the corresponding frontend driver to the backend driver.

By designating the reception vring for messages from the backend driver to the frontend driver, and the transmission vring for messages in the opposite direction, the method ensures a well-organized and streamlined data flow. This separation of communication channels minimizes the risk of data collisions and ensures that messages are delivered accurately.

According to a specific feature, in a performance mode, each second shared memory region is exclusively accessible by the backend driver and the frontend driver of the at least one user virtual machine.

Thus, the method minimizes latency and maximizes data throughput for applications, while ensuring data isolation between user VM. This exclusive access reduces the potential for memory contention and interference from other virtual machines, thereby enhancing the efficiency of data transmission and reception. Additionally, this approach strengthens data security by isolating the memory space used for network operations, preventing unauthorized access and ensuring that sensitive data remains protected.

According to a specific feature, in a normal mode, a part of the second shared memory region used for frame reception is accessible by the backend driver and each frontend driver of the at least one user virtual machine.

Hence, the method facilitates efficient use of memory resources across multiple virtual machines. This shared access model supports a larger number of user VMs by enabling them to utilize common memory resources for network operations, which is interesting in environments with limited hardware resources. Additionally, this approach enhances system flexibility by allowing dynamic allocation and reallocation of memory resources based on current network demands.

According to a specific feature, the hardware driver uses the at least one third memory region of the memory space dedicated to the Real-Time Operating Systems virtual machine as a function of a criticality class of network frames, where some dedicated queues are implemented.

In consequence, the method ensures that high-priority data is processed with minimal delay. This prioritization mechanism allows critical network frames to be handled with greater efficiency, reducing latency and ensuring timely data delivery for applications with stringent real-time requirements, notably the ones executed by the RTOS.

According to a specific feature, the dedicated queues can be assigned as a function of:
- at least one MAC address of the network interface controller (NIC),
- piece of data representing traffic classes,
- EtherType filed of network frames,
- piece of data representing VLAN priority.

The network interface controller sharing method according to claim 9, wherein the at least one MAC addresses is exclusively assigned to dedicated traffic of the Real-Time Operating Systems virtual machine, the at least one MAC addresses being assigned to a reception dedicated queue.

In some cases, a single MAC address is sufficient, used to filter Ethernet frames in reception, it is used in transmission in the Ethernet header regardless of the queue used.

According to a specific feature, the at least one EtherType filed of network frames is used to exclusively assign dedicated traffic of the Real-Time Operating Systems virtual machine.

Hence, the method ensures that specific types of network traffic are prioritized and directed appropriately, notably in for the tasks of the RTOS. This targeted traffic management enhances the performance of real-time applications by reducing processing delays and ensuring that critical data is delivered promptly. In addition, this approach allows for precise control over network traffic flows, enabling the system to differentiate between various protocol types and allocate resources accordingly.

According to a specific feature, the at least one MAC address is assigned to general traffic of the of the at least one user virtual machine, the at least one of MAC address being assigned to a least one second couple of dedicated queues.

Thus, the method ensures that network data is efficiently routed and processed. This setup allows for clear separation and prioritization of traffic types, reducing the likelihood of congestion and improving overall network performance.

According to a specific feature, on determining that the hardware driver receives a network frame in one of the dedicated queues, the backend driver transmit a message to the at least one of the frontend drivers to which the received network frame is intended for, said frame being stored in the second shared memory region.

Hence, the method ensures rapid processing and delivery of network data. This approach minimizes latency by streamlining the communication process between the hardware driver and the virtual machines, which is crucial for maintaining high performance in real-time applications. Additionally, this method enhances data integrity and reliability by ensuring that network frames are accurately directed to their intended destinations without unnecessary delays or processing overhead.

According to a specific feature, on determining that the at least one of the frontend driver stored a network frame to transmit in the at least one second shared memory region, the backend driver transmits this frame in one NIC transmission queues.

Thus, the method ensures that data is transmitted accurately and efficiently. This targeted approach to frame routing reduces the likelihood of transmission errors and minimizes delays, which is particularly beneficial in environments with high data throughput and real-time requirements.

According to another aspect, the invention also relates to a processing device for sharing a network interface controller, the processing device comprising at least one physical computing unit and at least one physical memory unit and the network interface controller NIC, the device comprising means for executing a virtual machine running a Real-Time Operating Systems in charge of executing time critical tasks, the RTOS:
- implementing a hardware driver for exclusively driving the NIC from the RTOS,
- implementing a backend driver for driving a virtual NIC from the RTOS, the backend driver enabling receiving and transmitting network frames to at least one user virtual machine, each of the at least one user virtual machine using a corresponding at least one frontend driver,
- setting at least one shared memory region of a memory space dedicated to the RTOS VM, to store and exchange the network frames of the at least one user virtual machine for enabling the backend driver to exchange the network frames with the at least one frontend driver.

According to a preferred implementation, the various steps of the methods according to the disclosure are implemented by one or more software or computer programs, comprising software instructions intended to be executed by a data processor of a relay module according to the disclosure and being designed to control the execution of the various steps of the methods.

Consequently, the disclosure also targets a program capable of being executed by a computer or by a data processor, this program comprising instructions for controlling the execution of the steps of a method as mentioned above. This program can use any programming language, and be in the form of source code, object code, or intermediate code. The disclosure also targets an information medium readable by a data processor, and comprising instructions of a program as mentioned above. The information medium can be any entity or device capable of storing the program, for example a storage means, a microelectronic circuit, or a magnetic or optical recording means. On the other hand, the information carrier may be a transmissible medium such as an electrical or optical signal, which may be conveyed via an electrical or optical cable, by radio or by other means. The program, according to the disclosure may in particular be downloaded from a network such as the Internet. Alternatively, the information carrier may be an integrated circuit in which the program is incorporated, the circuit being adapted to execute or to be used in the execution of the method in question. According to one embodiment, the disclosure is implemented by means of software and/or hardware components. With this in mind, the term "module" may correspond in this document to a software component, a hardware component or a set of hardware and software components. Each component of the system described above of course implements its own modules. The different embodiments mentioned above can be combined with each other for the implementation of the disclosure.

### Description of Drawings

Other features and advantages of the invention will appear more clearly on reading the following description of an embodiment of the invention, given as a simple illustrative and non-limiting example, and the appended drawings among which:
- Figure 1 is a representation of the architecture implemented for network interface sharing according to the disclosure,
- Figure 2 illustrates a method for sharing the network interface according to the disclosure,
- Figure 3 illustrates transmission and reception vrings according to the disclosure,
- Figure 4 is a representation of using massages in vrings so as to located and identify network frames in shared memory regions,
- Figure 5 illustrates assignments of the frame, in shared memory region, being inserted and picked from transmission and reception queues,
- Figure 6 illustrates the use of the transmission and reception queues in an example of application.

### Description of an embodiment

The disclosure proposes a method to efficiently share a single network interface NIC in a virtualized architecture among a set of different virtual machines (VM), while supporting Quality of Service for running VMs and network data flows. To reach real-time performance and support a mixed criticality system, this method can be advantageously implemented in a VM running a RTOS (called RTOS VM) with some dedicated CPU resources (vCPU or dedicated CPU) and memory resources (). The most critical network applications should run over the RTOS VM to get fastest access to the NIC and experienced the lowest network latency. Other (non-critical) network applications can run in one or more user VMs running a General Purpose Operating System (GPOS). The proposed architecture and method provides data isolation between user VM and RTOS VM, meaning user VMs cannot read or overwrite RTOS VM data flows. In addition, the method is able to implement a performance mode with strong data isolation, making network data flows of each user VM completely protected from other VMs, hence guaranteeing data security.

In short, the method is based on assigning the management of the NIC specifically to the RTOS VM, in a passthrough mode (meaning that the NIC is not managed by the hypervisor). Hence, the method of the disclosure combines:
- a fast inter-VM communication method used to transfer Ethernet frames between a master vNIC backend running preferably in a RTOS VM, and one or more slave vNIC frontends running in some independent user VMs, and optionally:
- a physical NIC controlling method implemented in a NIC driver running preferably in a RTOS VM with exclusive and direct access to the NIC hardware and relying on the usage of multiple MAC reception and transmission queues, allowing an efficient Ethernet frame dispatching to the different user VMs and RTOS-running tasks. Exclusive and direct access to the NIC can be implemented thanks to device passthrough technic that is available in most of existing hypervisors.

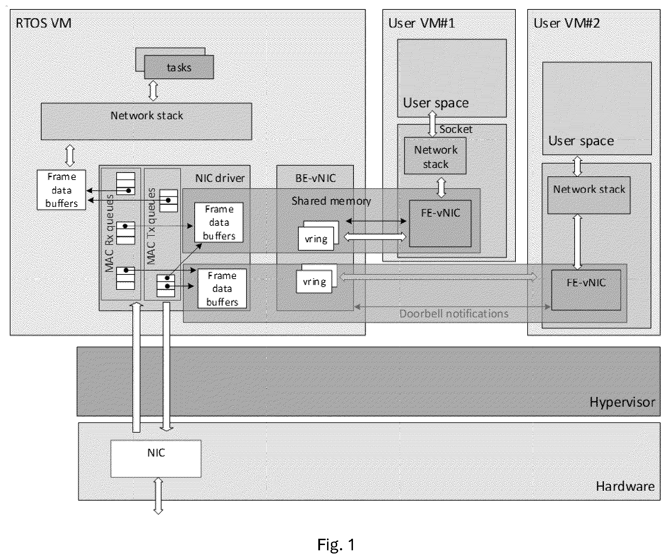

Fig. 1 illustrates an example of the virtualization configuration showing the implementation of the fast inter-VM communication method between one RTOS VM and two user VMs, and the NIC controlling method (running in a RTOS VM) managing three (3) MAC reception queues and two (2) MAC transmission queues. More specifically, it is illustrated an RTOS VM, which implements a NIC driver (piece of software for driving the NIC). The NIC Driver has exclusive access to the NIC of the hardware, in a passthrough mode (meaning the hypervisor, as illustrated has no management access to the NIC). The NIC driver is primarily used by tasks of the RTOS VM by implementing a network stack. This allows ensuring fast and efficient execution of the critical tasks of the RTOS VM. In addition, in the proposed and exemplified architecture, the RTOS VM implements a Virtual NIC (vNIC) backend (BE). This BE-vNIC is used to stack and share data (frames) to be sent and to receive from regular VM (e.g. two user VM are illustrated in fig. 1) running noncritical applications. In each regular VM, a frontend (FE) virtual NIC (vNIC) is implemented. These FE-vNIC are in charge of exchanging data with the BE-vNIC of the RTOS VM.

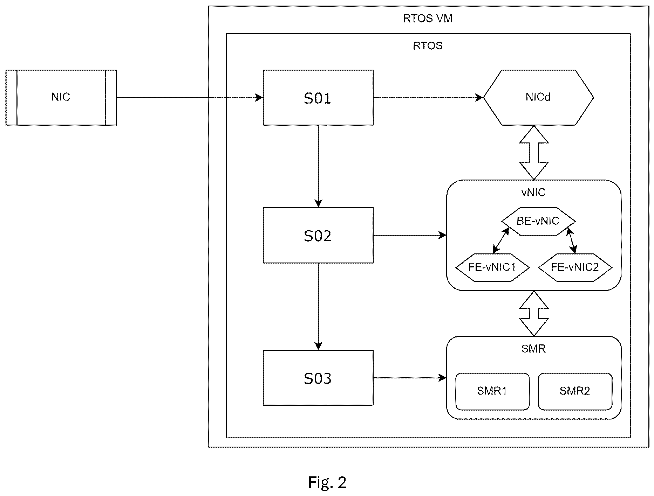

In relation with previous figure 1 and figure 2, the network interface controller sharing method of the disclosure is presented. The method comprises:
- implementing S01, by the RTOS, a hardware driver NICd for exclusively driving the NIC from the RTOS,
- implementing S02, by the RTOS, a backend driver BE-vNIC for driving a virtual NIC vNIC from said RTOS, the backend driver BE-vNIC enabling receiving and transmitting network frames to at least one user virtual machine (User VM#1, User VM#2, ...), each of the at least one user virtual machine (User VM#1, User VM#2, ...) using an at least one corresponding frontend driver (FE-vNIC1, FE-vNIC2, ...),
- the RTOS setting S03 at least one shared memory region SMR of a memory space dedicated to the RTOS VM, to store and exchange the network frames of the at least one user virtual machine (User VM#1, User VM#2, ...) for enabling the backend driver BE-vNIC to exchange the network frames with the at least one frontend driver (FE-vNIC1, FE-vNIC2, ...).

In the following, examples of implementation of the proposed method are disclosed. The one skilled in the art will be able to adapt these examples to specific requirement he may face, without leaving the scope of the disclosure.

With respect to the above presentation, the (fast) inter-VM communication method relies on the virtual Network Interface Controller (vNIC) that includes one master BE-vNIC running in the RTOS VM and one or more slave FE-vNIC running in each regular user VM . It allows fast network access by routing traffic to the physical TSN NIC managed by the RTOS as shown in figure 1. The "vNIC" (FE-vNIC and BE-vNIC) is based on the usage of the following memory structures:
- RTOS shared memory regions (SMR) between the RTOS VM and user VMs used for memory control structure and frame data transfer,
- virtual ring data structure (vrings) conceptually similar to virtio vrings for (queue management.

The hypervisor provides some mechanisms so that user VMs can discover the vNIC (for instance using a virtual PCI device) and register with the RTOS VM in order to register and use the vNIC interface. This registration procedure supports multiple user VMs. Its implementation is not part of the disclosure.

During the registration procedure of a FE-vNIC slave, the master BE allocates and initialized shared memory regions (SMR) and vrings to the user VMs, selects and attaches reception and transmission queues, depending on the mode (normal mode or performance mode).

At least two shared memory regions (SMR) are allocated per user VM (or at least two spaces (e.g. subregions) in one memory region). The first shared memory region (SMR1) is used exclusively by the vNIC to store:
- Information context that includes pointers to the different required memory structures,
- vrings used for queue management.

This first shared memory region (SMR1) is shared only between the RTOS VM and a registered user VM. The first shared memory region (SMR1) is initialized by the vNIC-BE master after the registration process. It contains VM identifier (VM_ID) of master and slaves (used notably to set a "doorbell" notification mechanism), the states of each VM peer (master for BE, slave for FE), the size of the mapped memory region. The first shared memory region (SMR1) also contains size and pointers to:
- vrings structures used for transmission and reception (RX_VRING_ADDR/ TX_VRING_ADDR),
- frame data buffer region that contains Rx/Tx frame data buffers with fixed size (FRAME_DATA_ADDR/FRAME_DATA_SlZE).

The second shared memory region (SMR2) is used to store frame data buffers used for transmission and reception. It contains the buffers pointed by the associated NIC HW (hardware) transmission and reception queues. It is used by NIC DMA (direct memory access) to store received frames and retrieve data for transmitted frames.

In the "performance" mode, this second shared memory region (SMR2) is only shared between the BE_vNIC running in the RTOS VM and the FE_vNIC running in a registered user VM (user VM#1, user VM#2,...).

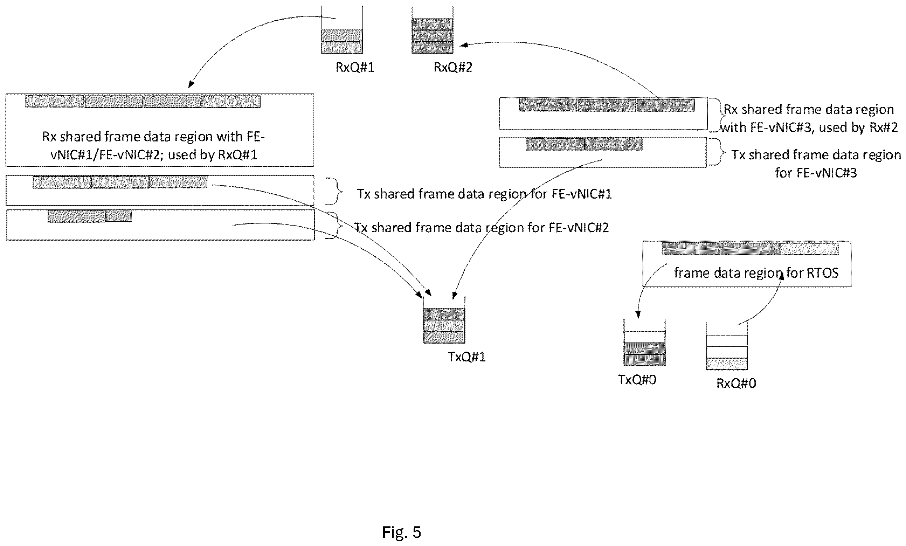

In "normal mode", a set of user VMs can use the same NIC reception queue. Indeed, the number of NIC queues is limited (for instance 4 reception queues and 4 transmission queues for Intel NIC i225/i226 supporting TSN) so it is necessary to map several user VMs over a single NIC reception queue in order to support a large number of user VMs. In that case, the part of the second shared memory region (SMR2) frame dedicated to received frames, as illustrated in figure 5 bellow, is shared among all FE-vNIC that uses the reception queue as shown in the figure below. The BE-vNIC is then in charge of multiplexing frame to be transmitted, and dispatch received frames to the intended FE-vNIC.

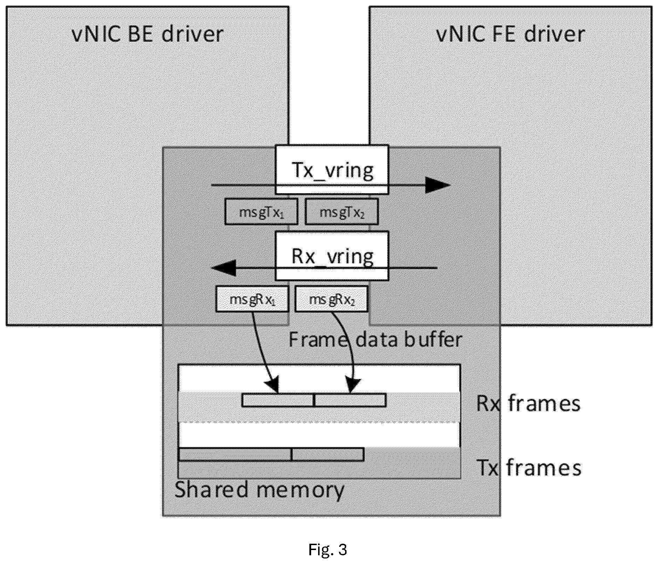

As illustrated in figure 3, "vrings" are used to implement a fast and efficient communication channel between the vNIC-BE and vNIC-FE. More specifically, a " vring" is a uni-directionnal communication channel with a producer and a consumer, that allows to send a message from the producer to the consumer. In consequence, for each vNIC-FE (i.e. for each user VM), two independent vrings are implemented to allow bi-directional communication:
- the first vring named Tx_vring is used for vNIC-FE /(slave) to vNIC-BE (master) communication. It is used to carry Ethernet frames generated by the user VM and to be transmitted over the NIC.
- the second vring named Rx_vring is used for vNIC-BE (master) to vNIC-FE (slave) communication. It is used to carry Ethernet frames received by the physical NIC managed by RTOS VM, and intended to the user VM.

According to the disclosure, these vrings are used to convey different vNIC messages, according to message types as listed in the following table.

**[table1]**

| Msg_Type | Direction | Description |
|---|---|---|
| IVN_MSGTYPE_FRAME | bi-directional | Carry an Ethernet frame, with reference to a frame buffer |
| IVN_MSGTYPE_RELEASE_BUF | vNIC-FE -> vNIC-BE | Release a frame buffer |
| IVN_MSGTYPE_LINKSTATE | vNIC-BE -> vNIC-FE | indicate ethernet link state (up/down/speed/duplexing) |
| IVN_MSGTYPE_MCLIST | vNIC-FE -> vNIC-BE | List of filtered multicast address |
| IVN_MSGTYPE_UCLIST | vNIC-FE -> vNIC-BE | List of filtered unicast address |

### More specifically:

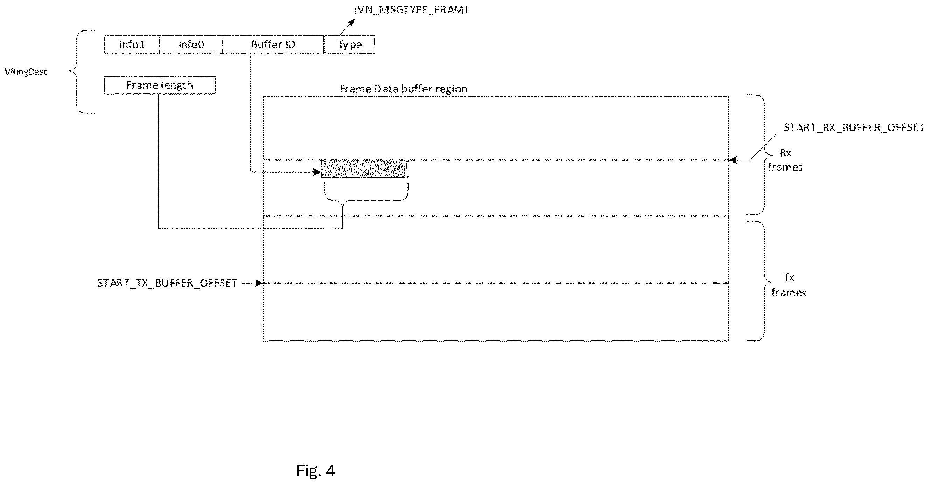

- The IVN_MSGTYPE_FRAME message, illustrated in figure 4, is used to indicate to the vring endpoint (BE_vNIC of FE_vNIC#n entity) that a new frame is ready and shall be processed. This type of message contains: the offset of the frame in the frame data buffer region, the frame length, and additional fields that can be useful for checksum offloading (if the NIC supports this feature).
   In normal mode, the frame data buffer region can be shared among different FE-vNIC slaves. As each FE-vNIC is in charge of selecting buffers used for frame transmission, the vNIC-BE also indicates which set of Tx buffers are dedicated to the vNIC-FE. Information are stored into START_TX_BUFFER_OFFSET/ TX_BUFFER_SIZE parameters located in the first shared memory region SMR1. The same parameters are also available for frame reception (START_RX_BUFFER_OFFSET/ RX_BUFFER_SIZE).
   As indicated above, Vring relies on a doorbell mechanism for notification between the vring endpoints. This mechanism is preferably implemented using InterProcessor Interrupts and some specific interrupt handlers that trigger operations in endpoints.
- The IVN_MSGTYPE_UCLIST and IVN_MSGTYPE_MCLIST are used by the slave to setup the unicast MAC addresses attached to the FE-VNIC slave. It means that all received frames with destination address included into one of these lists will be forwarded to this FE-vNIC slave.

In addition to these architectural elements, an additional point of the disclosure is a method to control the NIC so that user VM's Ethernet frames are multiplexed efficiently with RTOS VM's critical frames. This is illustrated in figure 5.

The method relies on the usage of some dedicated MAC reception and transmission queues of the physical NIC to store received and transmitted frames. Those frames are stored (from or to the queues) in (or retrieved from) some second shared memory regions (SMR2) with the intended user VMs, which allows zero-copy read/write transfer of the received and transmitted Ethernet frames.

In reception, a set of MAC queues are dedicated to traffic handled by RTOS (Rx/TxQ#0 in the example), meaning critical data flows such as industrial field bus. Another set of MAC reception queues are dedicated to traffic routed to user VMs through FE-vNIC slaves, meaning non-critical data flows. These MAC queues are setup so that their pointed frame buffers are located in the memory region shared with the relevant FE-vNIC slave as illustrated in figure 5. Incoming Ethernet frames are assigned by the NIC to a specific queue according to different rules. For instance, assignment rules can rely on:
- Destination MAC address
- EtherType
- VLAN priority

Depending on the system, different assignment rules can be configured. For instance, if the RTOS must process only some specific layer-2 protocols such as those used for industrial field-buses, then the EtherType-based assignment rules are set up so that all related frames are put in a NIC queues dedicated to RTOS. In addition, some MAC Destination address assignments are also setup in order to respect the FE-vNIC slave setup done using IVN_MSGTYPE_MCLIST/ IVN_MSGTYPE_UCLIST messages.

Using this setup, the RTOS MAC reception process (executed by the NIC driver) does not need to read the frame data header to route frame toward the intended VMs, then avoiding memory transfer and also some possible cache pollution effect. Then, it reduces the latency for frame reception operations.

Similarly, in transmission, a set of NIC transmission queues are dedicated to traffic generated by RTOS, for instance industrial field bus critical flows. A set of MAC queues are dedicated to traffic generated by user VM. The NIC is configured to transmit with priority queues dedicated to critical traffic. In the same way, queues used for user VMs may be ordered so that traffic emitted by some VMs can be sent with priority. TSN time-aware shaper can also be used as an alternative, each transmission queues being mapped to a particular class of traffic.

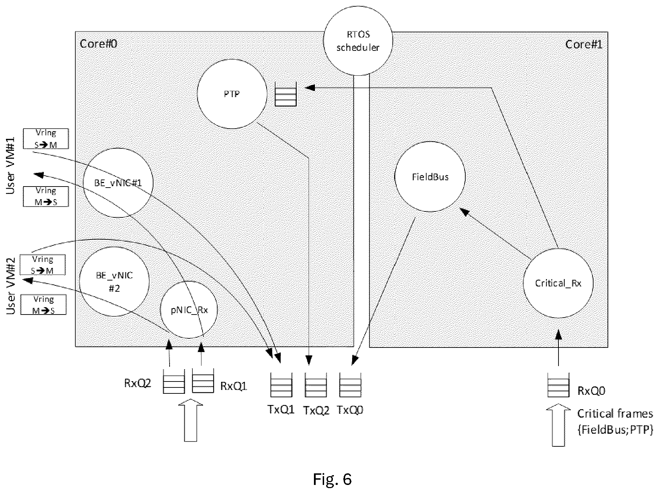

Figure 6 illustrates an operation example using the architecture and methods exposed above. As illustrated, in this example, both Core#0 and Core#1 execute the RTOS while two user VMs are able to uses the NIC. In this illustrative operation example, the pNIC_Rx task has the charge of reading MAC reception queues attached to the BE-vNIC master instances (BE-vNIC#1 and BE-vNIC#2), where are received frames intended to the different FE-vNIC slaves (not shown). One can notice hereafter that the registered FE-vNIC #k is using MAC reception queue Q_{Rx,k}. In performance mode, Q_{Rx,k} is different for each registered FE-vNIC. In normal mode, two FE-vNIC (k,m) may use the same Rx queue, then Q_{Rx,k}=Q_{Rx,m}

BE_vNIC#n implements the inter-VM communication method between the master (itself) and FE_vNIC slave #n, as exposed herein above, notably using vrings and messages. Critical_Rx reads MAC receptions queues attached to the RTOS, where are received critical frames that shall be processed by RTOS tasks (e.g. FieldBus, PTP in the illustrated example). Critical_Rx and pNIC_Rx are distinct RTOS tasks so that they can be run in different CPU cores (Core#0 and Core#1).
Reception (pNIC-Rx -> BE_vNIC -> FE_vNIC)

In order to receive frame from the NIC, the pNIC-Rx task allocates some frame data buffers for each used reception queue Q_{Rx,j}. Those frame data buffers are located in the part of the second shared memory region (SMR2) dedicated to frame reception, shared among the set of FE-vNIC that are attached to queue Q_{Rx,j}. In performance mode, this set only includes one FE-vNIC.

One or more frames arrived in MAC Reception queue RxQj and generate(s) an interruption processed by pNIC_Rx. All frames in Q_{Rx,j}. are then dequeued. For each frame, a message IVN_MSGTYPE_FRAME is prepared and posted to the vRing attached to the slave FE_vNIC #k (to which) the queue is attached.

In normal mode, several FE_vNIC slaves may be attached to a single NIC reception queue which implies that every FE_vNIC uses a single NIC reception queue must have access to the associated second shared memory region (not illustrated). In this mode, the pNIC_Rx reads the MAC destination address to determine in which vring the IVN_MSGTYPE_FRAME message must be posted.

For broadcast frames, the pNIC_Rx posts an IVN_MSGTYPE_FRAME message to every registered FE-vNIC slaves, with a single reference to a frame buffer. Multicast frames may also be sent to several FE-vNIC slaves if some identical multicast MAC addresses are registered by those FE-vNIC slaves.

When receiving an IVN_MSGTYPE_FRAME message, the FE-vNIC calculates the corresponding frame buffer offset into the shared frame data buffer region using the START_RX_BUFFER_OFFSET parameter and the BUFFER_OFF field in IVN_MSGTYPE_FRAME message. Then, it can process the frame by injecting it into the network stack of the OS running in the VM. Once the frame is processed, then the FE-vNIC releases the associated frame data buffer by sending an IVN_MSGTYPE_RELEASE_BUF message to the BE_vNIC master. Upon reception of this message, the BE_vNIC releases the occupied frame data buffer. It will be reuse to feed the NIC MAC Rx queue Q_{Rx,j} by pNIC-Rx.

For broadcast/multicast frames sent to several FE-vNICs, the BE-vNIC shall receive IVN_MSGTYPE_RELEASE_BUF messages from every FE-vNIC before releasing the frame.
Transmission (FE-vNIC -> BE_vNIC -> pNIC-Tx)

The FE-vNIC#n slave running in a user VM receives frame from the OS network stack. The FE-vNIC first allocates a frame data buffer in the Tx shared data buffer region and copy the frame data into the buffer. The FE-vNIC posts, to the vring, an IVN_MSGTYPE_FRAME message that contains a BUFFER_OFF field that indicates the buffer offset into the region. Upon reception of this message, the BE_vNIC instance calculates the memory address of the buffer storing the Ethernet frame data using the START_TX_BUFFER_OFFSET parameter associated to the FE-vNIC#n and the BUFFER_OFF field in IVN_MSGTYPE_FRAME message.

A new entry is then added to the corresponding NIC Tx queue, with a reference to the calculated memory address (i.e. the data buffer address used for the transmitted frame).

Once the frame is effectively emitted by the NIC, then the BE_vNIC sends an IVN_MSGTYPE_RELEASE_BUF message to the FE-vNIC#n slave to notify the FE-vNIC#n the occupied frame buffer can be released. This buffer will be reused by the FE-vNIC#n slave to send further frames.

As it can be understood, herein, the method of the disclosure can be applied in any application domains with mixed criticality and real-time requirements, for example those using communications with low-latency needs based on the IEEE TSN standards. In these domains, it can be implemented in communication controller or edge computing machines that run a mix of applications with heterogeneous constraints in terms of security, safety, real-time.

## Claims

1. A network interface controller (NIC) sharing method, the method being implemented by a virtual machine (RTOS VM) running a Real-Time Operating Systems (RTOS) in charge of executing time critical tasks, the network interface controller NIC being attached to a processing device comprising at least one physical computing unit and at least one physical memory unit, the method comprising:
- implementing (S01), by the RTOS, a hardware driver (NICd) for exclusively driving the NIC from the RTOS,
- implementing (S02), by the RTOS, a backend driver (BE-vNIC) for driving a virtual NIC (vNIC) from said RTOS, the backend driver (BE-vNIC) enabling receiving and transmitting network frames to at least one user virtual machine (User VM#1, User VM#2, ...), each of the at least one user virtual machine (User VM#1, User VM#2, ...) using an at least one corresponding frontend driver (FE-vNIC1, FE-vNIC2, ...),
- the RTOS setting (S03) at least one shared memory region (SMR, SMR1, SMR2) of a memory space dedicated to the RTOS VM, to store and exchange the network frames of the at least one user virtual machine (User VM#1, User VM#2, ...) for enabling the backend driver (BE-vNIC) to exchange the network frames with the at least one frontend driver (FE-vNIC1, FE-vNIC2, ...).

2. The network interface controller (NIC) sharing method according to claim 1, wherein setting (S03) the at least one subspace of the memory space comprises: the backend driver (BE-vNIC) registering the at least one user virtual machine (User VM#1, User VM#2, ...) through the at least one frontend driver (FE-vNIC1, FE-vNIC2) of the at least one user virtual machine (User VM#1, User VM#2, ...) and comprises:
- the backend driver (BE-vNIC) allocating and initializing one first shared memory region (SMR1) for each of the frontend driver (FE-vNIC1, FE-vNIC2, ...), each first shared memory region (SMR1) comprising network frame exchanges data structures,
- the backend driver (BE-vNIC) allocating and initializing at least one second shared memory region (SMR2) to store network frames data buffers used for transmission and reception.

3. The network interface controller (NIC) sharing method according to claim 2, wherein each first shared memory region (SMR1) is exclusively accessible by the backend driver and the at least one frontend driver (FE-vNIC1, FE-vNIC2, ...) each belonging to a sole user virtual machine (User VM#1, User VM#2, ...).

4. The network interface controller (NIC) sharing method according to claim 2, wherein network frame exchange data structures initialized in the first shared memory region (SMR1) comprise, for a each frontend driver (FE-vNIC1, FE-vNIC2,...), at least a couple of vrings data structure, comprising a transmission vring data structure (Tx_vring) and a reception vring data structure (Rx_vring).

5. The network interface controller (NIC) sharing method according to claim 4, wherein:
- the reception vring data structure (Rx_vring) is used to convey messages from the backend driver (BE-vNIC) to the corresponding frontend driver (FE-vNIC1, FE-vNIC2,...),
- the transmission vring data structure (Tx_vring) is used to convey messages from the corresponding frontend driver (FE-vNIC1, FE-vNIC2,...) to the backend driver.

6. The network interface controller (NIC) sharing method according to claim 2, wherein, in a performance mode, each second shared memory region (SMR2) is exclusively accessible by the backend driver and the frontend driver (FE-vNIC1, FE-vNIC2, ...) of the at least one user virtual machine (User VM#1, User VM#2, ...).

7. The network interface controller (NIC) sharing method according to claim 2, wherein, in a normal mode, a part of the second shared memory region (SMR2) used for frame reception is accessible by the backend driver and each frontend driver (FE-vNIC1, FE-vNIC2, ...) of the at least one user virtual machine (User VM#1, User VM#2, ...).

8. The network interface controller (NIC) sharing method according to claim 1, wherein the hardware driver (NICd) uses the at least one third memory region of the memory space dedicated to the Real-Time Operating Systems (RTOS) virtual machine (RTOS VM) as a function of a criticality class of network frames, where some dedicated queues are implemented.

9. The network interface controller (NIC) sharing method according to claim 8, wherein the dedicated queues can be assigned as a function of:
- at least one MAC address of the network interface controller (NIC),
- piece of data representing traffic classes,
- EtherType filed of network frames,
- piece of data representing VLAN priority.

10. The network interface controller (NIC) sharing method according to claim 9, wherein the at least one MAC addresses is exclusively assigned to dedicated traffic of the Real-Time Operating Systems (RTOS) virtual machine (RTOS VM), the at least one MAC addresses being assigned to a reception dedicated queue.

11. The network interface controller (NIC) sharing method according to claim 9, wherein the at least one EtherType filed of network frames is used to exclusively assign dedicated traffic of the Real-Time Operating Systems (RTOS) virtual machine (RTOS VM).

12. The network interface controller (NIC) sharing method according to claims 8 to 10, wherein the at least one MAC address is assigned to general traffic of the of the at least one user virtual machine (User VM#1, User VM#2, ...), the at least one of MAC address being assigned to a least one second couple of dedicated queues.

13. The network interface controller (NIC) sharing method according to claims 8 to 12, wherein on determining that the hardware driver (NICd) receives a network frame in one of the dedicated queues, the backend driver (BE-vNIC) transmit a message to the at least one of the frontend drivers (FE-vNIC1, FE-vNIC2, ...) to which the received network frame is intended for, said frame being stored in the second shared memory region (SMR2).

14. The network interface controller (NIC) sharing method according to claims 8 to 11, wherein on determining that the at least one of the frontend drivers (FE-vNIC1, FE-vNIC2, ...) stored a network frame to transmit in the at least one second shared memory region (SMR2), the backend driver (BE-vNIC) transmits this frame in one NIC transmission queues.

15. A processing device for sharing a network interface controller (NIC), the processing device comprising at least one physical computing unit and at least one physical memory unit and the network interface controller NIC, the device comprising means for executing a virtual machine (RTOS VM) running a Real-Time Operating Systems (RTOS) in charge of executing time critical tasks, the RTOS:
- implementing (S01) a hardware driver (NICd) for exclusively driving the NIC from the RTOS,
- implementing (S02) a backend driver (BE-vNIC) for driving a virtual NIC (vNIC) from the RTOS, the backend driver (BE-vNIC) enabling receiving and transmitting network frames to at least one user virtual machine (User VM#1, User VM#2, ...), each of the at least one user virtual machine (User VM#1, User VM#2, ...) using a corresponding at least one frontend driver (FE-vNIC1, FE-vNIC2, ...),
- setting (S03) at least one shared memory region (SMR) of a memory space dedicated to the RTOS VM, to store and exchange the network frames of the at least one user virtual machine (User VM#1, User VM#2, ...) for enabling the backend driver (BE-vNIC) to exchange the network frames with the at least one frontend driver (FE-vNIC1, FE-vNIC2, ...).
